Europäisches Patentamt

European Patent Office

Office européen des brevets

(19)

(11) Numéro de publication: **0 056 920**
**A1**

(12) **DEMANDE DE BREVET EUROPEEN**

(21) Numéro de dépôt: **81402053.3**

(22) Date de dépôt: **22.12.81**

(51) Int. Cl.³: **G 11 B 7/12**

(30) Priorité: **23.01.81 FR 8101288**

(43) Date de publication de la demande:
**04.08.82 Bulletin 82/31**

(84) Etats contractants désignés:
**DE GB IT NL**

(71) Demandeur: **THOMSON-CSF**
**173, Boulevard Haussmann**
**F-75360 Paris Cedex 08(FR)**

(72) Inventeur: **Leterme, Dominique**
**THOMSON-CSF SCPI 173, bld Haussmann**
**F-75360 Paris Cedex 08(FR)**

(72) Inventeur: **le Merer, Jean-Pierre**
**THOMSON-CSF SCPI 173, bld Haussmann**
**F-75360 Paris Cedex 08(FR)**

(74) Mandataire: **Lepercque, Jean et al,**
**THOMSON-CSF SCPI 173, Bld Haussmann**
**F-75360 Paris Cedex 08(FR)**

(54) **Dispositif optique d'enregistrement lecture d'un support d'information comportant deux sources laser de longueurs d'onde différentes.**

(57) L'invention concerne un dispositif optique d'enregistrement lecture d'un support d'information comportant des moyens d'émission de deux rayonnements polarisés dans une même direction et de longeurs d'onde différentes ($\lambda_1$ et $\lambda_2$).

Ce dispositif comporte également des moyens optiques comprenant au moins un élément de séparation (20), une lame quart d'onde (21) et des optiques de focalisation ($L_3$ et $L_4$) permettant de focaliser sur deux organes photodétecteurs ($D_A$ et $D_B$) les composantes de lecture et d'enregistrement du faisceau composite réfléchi sur le support d'information (5).

EP 0 056 920 A1

FIG.1

# DISPOSITIF OPTIQUE D'ENREGISTREMENT LECTURE D'UN SUPPORT D'INFORMATION COMPORTANT DEUX SOURCES LASER DE LONGUEURS D'ONDE DIFFERENTES

L'invention se rapporte à un dispositif optique d'enregistrement-lecture de support d'information.

L'invention concerne plus particulièrement les systèmes enregistreurs-lecteurs dans lesquels le support d'information est un disque. Actuellement on peut enregistrer environ $10^{10}$ éléments binaires d'information sur un disque d'une trentaine de centimètres de diamètre. Ces systèmes peuvent être utilisés comme mémoire de masse pour des ensembles de traitement numérique de données. Ces systèmes doivent permettre un accès aléatoire à une partie prédéterminée des données enregistrées, par exemple un bloc de mots binaires de longueur fixe ou variable. D'autre part la vitesse de calcul des unités de traitement de l'information nécessite de nombreux échanges entre les mémoires périphériques et ces unités de calcul. Il est donc nécessaire que l'accès à une piste prédéterminée d'un support d'informations mobile se fasse dans le temps le plus court possible, ce aussi bien pour lire des informations préenregistrées, que pour enregistrer de telles informations, quelle que soit la position de cette piste sur le disque. Typiquement le temps moyen d'accès doit être inférieur à 100 millisecondes.

Les dispositifs d'accès à une piste actuellement réalisés sont essentiellement destinés à des disques sur lesquels l'information enregistrée contient un signal vidéo sous forme numérique.

Un dispositif de l'art connu comporte un équipage mobile comprenant un miroir galvanométrique et un objectif de focalisation, mobile par rapport au support d'information, et deux sources d'énergie rayonnantes fixes comprenant chacune un émetteur laser, ce qui permet de réduire de façon considérable le temps d'accès à une piste du disque optique.

Le faisceau qui atteint l'équipage mobile est un faisceau de rayons parallèles, quelle que soit la position de cet équipage par rapport aux sources d'énergie rayonnantes. La lecture et le contrôle de l'enregistrement s'effectuent par détection de l'intensité des faisceaux réfléchis par la surface des zones lues ou enregistrées.

Les faisceaux parallèles, respectivement de lecture et d'enregistrement, émis par les deux sources correspondantes et combinées en un faisceau composite, doivent être très faiblement inclinés l'un par rapport à l'autre, il devient très difficile de détecter séparément ces deux faisceaux dans des dispositifs présentant un faible encombrement. De grandes distances sont en effet nécessaire avant d'obtenir une séparation complète des faisceaux.

Dans un dispositif de l'art antérieur, l'emploi de deux séparateurs de polarisation utilisés en série permet d'adapter la tête mobile aux lasers à semiconducteur, mais ceci ne peut se faire qu'avec une perte non négligeable sur la puissance du faisceau de lecture qui doit donc être choisi assez puissant.

Le dispositif selon l'invention élimine tous ces problèmes de pertes de puissance : il nécessite l'utilisation de deux lasers de longueurs d'onde différentes ; une pour la lecture et l'autre pour l'enregistrement. Ce dispositif permet de réaliser, de façon simple, un enregistreur-lecteur de disques optiques à deux lasers fixes de longueurs d'ondes différentes et à tête optique mobile.

Pour réaliser un enregistreur-lecteur de disques optiques, il faut pouvoir focaliser sur le disque deux taches très rapprochées pour rester dans le champ de l'objectif. Ceci impose donc une séparation angulaire très faible des deux faisceaux lumineux, donc de très grandes distances pour les séparer spatialement sans perte de lumière ; la distance étant d'autant plus grande que le diamètre du faisceau est plus grand. D'autre part, les pertes de lumière pour les faisceaux de lecture et d'enregistrement surtour, doivent être minimales.

Ainsi le fait d'utiliser pour l'enregistreur-lecteur deux lasers de longueurs d'onde différentes, permet d'éliminer tous ces problèmes de séparation angulaire et de perte de lumière et d'obtenir alors un rendement énergétique maximum.

Le dispositif de l'invention a pour objet un dispositif optique d'enregistrement lecture d'un support d'information comportant des moyens d'émission de deux rayonnements polarisés dans une même direction et de longueurs d'onde différente ($\lambda_1$ et $\lambda_2$), l'un de ces rayonnements étant utilisé pour la lecture d'informations enregistrées sur le support d'informations et l'autre rayonnement étant utilisé pour l'enregistrement d'informations sur ce support d'informations ; l'enregistrement et la lecture s'effectuant grâce à une tête d'enregistrement lecture solidaire d'un équipage mobile par rapport au support d'informations et comprenant un objectif focalisant ces rayonnements sur la face réfléchissante de ce support selon deux taches lumineuses distinctes et rapprochées l'une de l'autre, les rayonnements réfléchis par cette face étant recueillis par cet objectif et transmis vers des moyens photodétecteurs, caractérisé en ce que les rayonnements reçu par la pupille d'entrée de l'objectif proviennent d'une lame dichroïque ; les rayonnements réfléchis par le support et émergeant de l'objectif subissant une séparation de type dichroïque ; ces rayonnements reçus et ces rayonnements réfléchis étant séparés optiquement par au moins un ensemble séparateur par polarisation et au moins une lame quart d'onde.

Les caractéristiques et avantages de l'invention apparaîtront dans la description ci-après, en référence aux figures annexées parmi lesquelles :

- la figure 1 illustre un premier exemple de réalisation du dispositif optique suivant l'invention ;

- les figures 2 et 3 sont des figures explicatives ;

- la figure 4 illustre un deuxième exemple de réalisation du dispositif suivant l'invention ;

- la figure 5 représente une variante de réalisation des dispositifs des figures 1 et 4 ;

- la figure 6 représente une seconde variante de réalisation des dispositifs des figures 1 et 4 ;

- la figure 7 représente une troisième variante de réalisation des dispo-sitifs des figures 1 et 4.

L'invention concerne un dispositif optique d'enregistrement-lecture de supports d'information, notamment sous forme de disques. Elle se rapporte plus particulièrement aux dispositifs du type comprenant une partie fixe constituée par les sources d'énergie lumineuse et une partie mobile constituée par la tête d'enregistrement-lecture. Cette dernière comprend un

4

objectif du type microscope, solidaire d'une bobine électromagnétique se déplaçant dans le champ magnétique d'un aimant permanent assurant l'asservissement vertical et un miroir galvanométrique assurant l'asservissement radial.

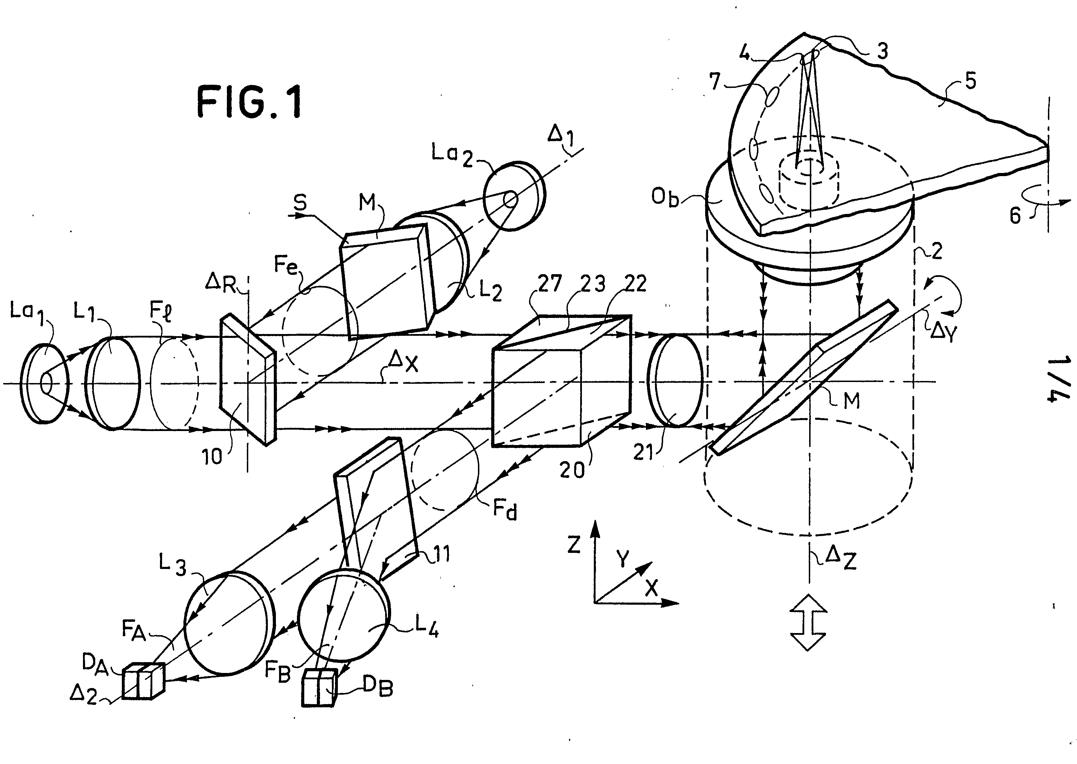

La figure 1 illustre un exemple de réalisation d'un dispositif optique d'enregistrement-lecture du type décrit ci-dessus et mettant en oeuvre des sources lasers de longueurs d'onde différentes pour produire l'énergie rayonnante. Ces lasers $La_1$ et $La_2$ émettent des faisceaux polarisés rendus parallèles au moyen de lentilles collimatrices $L_1$ et $L_2$.

Pour la lecture, le faisceau $F_1$ parallèle et polarisé éclaire la pupille d'entrée d'un objectif $O_b$ de type microscope. Un miroir galvanométrique M dévie les rayons se propageant parallèlement à l'axe optique $\Delta_x$, suivant l'axe $\Delta_z$. Les axes $\Delta_x$ et $\Delta_z$ sont respectivement parallèles aux axes X et Y du trièdre de référence XYZ. L'objectif $O_b$ focalise le faisceau $F_1$ en un spot de lecture 3 sur le disque support d'information 5. Ce disque est animé d'un mouvement de rotation symbolisé par la flèche 6. L'objectif $O_b$ et le miroir M sont solidaires d'un boitier 2 constituant la tête d'enregistrement-lecture. L'objectif peut se mouvoir suivant l'axe $\Delta_z$, entrainé par des moyens d'asservissement de manière à ce que le faisceau de lecture se focalise exactement sur les pistes 7 portant les informations à lire. En outre le miroir M est mobile autour de l'axe $\Delta_y$, pour assurer un déplacement radial du spot de lecture.

Un procédé bien connu pour enregistrer des informations consiste à former des microreliefs ou plus généralement toute modification de caractéristique lisible optiquement. A la surface du disque 5, ces altérations ont une longueur variable suivant la direction des pistes 7. Ces pistes se présentent sous la forme d'une spirale unique ou de cercles concentriques. La longueur variable des altérations est représentative d'une onde porteuse rectangulaire modulée en durée par les informations à enregistrer.

Dans le cadre du dispositif de la figure 1, la lecture s'effectue par réflexion du faisceau de lecture focalisé en 3 sur une surface réfléchissante, par exemple un dépôt métallique effectué sur la face du disque portant les altérations d'amplitude ou de phase. Le faisceau de lecture est modulé par ces altérations, cette modulation représentant les informations enregistrées sur la face lue du disque.

Ce faisceau de lecture modulé est alors détecté par des moyens photodétecteurs $D_A$, $D_B$.

Les rayonnements ainsi détectés sont utilisés à plusieurs fins : outre leur utilisation pour la reconstitution des informations lues sur le disque 5, ces rayonnements sont également utilisés pour assurer l'asservissement vertical et l'asservissement radial. De la même façon, on utilise un faisceau d'enregistrement $F_e$ ayant été préalablement modulé de façon classique par un modulateur M qui reçoit les signaux à enregistrer. Afin de différencier les taches de lecture et d'enregistrement sur le disque 5 on incline légèrement le faisceau d'enregistrement $F_e$ par rapport au faisceau de lecture $F_1$ à l'entrée de l'objectif $O_B$.

Mais le décentrement du faisceau d'enregistrement par rapport à la pupille d'entrée de l'objectif est très limité. On peut donc négliger ce décentrement lors d'un déplacement radial de la tête. Il s'en suit que quelle que soit la position de l'objectif le long de l'axe $\Delta_x$, le faisceau d'enregistrement est focalisé au foyer de l'objectif tout en assurant une bonne discrimination des faisceaux d'enregistrement $F_e$ et de lecture $F_1$.

Cependant, puisque deux faisceaux différents sont mis en oeuvre, le premier pour l'enregistrement et le second pour la lecture, et que l'énergie de ces faisceaux, après leur réflexion sur le disque doit être détectée, soit pour élaborer des signaux restituant l'information lue, soit des signaux utilisés à des fins d'asservissement, il est donc nécessaire de discriminer les faisceaux réfléchis.

Les deux faisceaux, respectivement d'enregistrement $F_e$ et de lecture $F_1$, doivent être focalisés sur le disque 5 en des endroits très rapprochés, pour que les taches d'enregistrement 4 et de lecture 3, soient pratiquement confondues pour rester dans le champ de l'objectif d'enregistrement-lecture $O_b$ et pour que la lecture intervienne immédiatement après l'enregistrement.

Comme représenté à la figure 1, le dispositif selon l'invention comporte deux faisceaux : un faisceau d'enregistrement $F_e$ et un faisceau de lecture $F_1$. Ces deux faisceaux sont légèrement inclinés l'un par rapport à l'autre au niveau de la pupille d'entrée de l'objectif. On a un premier laser

6

semiconducteur $La_1$ émettant un rayonnement de longueur d'onde $\lambda_1$, et associé à une optique collimatrice symbolisée par la lentille $L_1$ et un second laser semiconducteur $La_2$ émettant un rayonnement de longueur d'onde $\lambda_2$ et associé à une optique collimatrice $L_2$. Ces deux lasers émettent respectivement les faisceaux de lecture $F_1$ et d'enregistrement $F_e$. Ces deux faisceaux sont polarisés linéairement et leurs directions de polarisation sont parallèles entre elles. Les deux sources lasers ainsi constituées émettent suivant des directions sensiblement parallèles aux axes $\Delta_x$ et $\Delta_1$, parallèles aux axes X et Y d'un trièdre de référence XYZ. L'axe X est par exemple orienté selon un rayon d'un support d'information en forme de disque. Ces deux faisceaux après avoir été collimatés sont alors combinés par l'élément optique 10 qui dans le cas de la figure 1 est un miroir dichroïque. En effet les deux faisceaux ont deux longueurs d'onde différentes : le faisceau $F_1$ une longueur d'onde $\lambda_1$ et le faisceau $F_e$ une longueur d'onde $\lambda_2$. Ce miroir 10 permet donc de transmettre le faisceau $F_1$ de longueur d'onde $\lambda_1$ et de réfléchir le faisceau $F_e$ de longueur d'onde $\lambda_2$ afin d'obtenir un faisceau composite à sa sortie. Il permet d'autre part de régler l'angle d'inclinaison entre les faisceaux d'écriture et de lecture en sortie de ce miroir en le faisant pivoter autour de l'axe $\Delta_R$. Sur la figure 1 on n'a pas représenté cette différence angulaire, car elle est très faible.

Ces deux faisceaux $F_e$ et $F_1$ sont donc transmis en totalité par ce miroir dichroïque pour former à sa sortie un faisceau composite dont les deux composantes ont des directions de polarisation parallèles.

Ce faisceau composite traverse alors un cube séparateur de polarisation 20 constitué de deux prismes collés 27 et 22. La surface de séparation 23 constituée par l'hypoténuse de ces deux prismes est traitée de façon à être séparatrice de polarisation. Cet élément présente un axe optique préférentiel. Les rayons incidents ayant une direction de polarisation parallèle à cet axe sont transmis en totalité sans modification, parallèlement à la direction d'incidence. Les rayons incidents ayant une direction de polarisation orthogonale à la direction précédente sont réfléchis en totalité suivant une direction orthogonale à la direction d'incidence. Les faces du cube ont subi, en outre, un traitement de surface pour éviter les reflets parasites.

7

Ce cube 20 est orienté pour transmettre intégralement ce faisceau composite de polarisation déterminée.

Les deux composantes émergent alors de ce cube de séparation 20 et traversent une lame quart d'onde 21 avant d'atteindre le support d'information 5 : cette lame 21 ayant été étudiée pour être efficace aux deux longueurs d'ondes considérées $\lambda_1$ et $\lambda_2$. C'est une lame d'épaisseur e telle que $\left| n_e - n_o \right| e = \frac{\lambda 1}{4} + K_1 \lambda_1 = \frac{\lambda 2}{4} + K_2 \lambda_2$ ; $n_o$ et $n_e$ étant les indices ordinaire et extraordinaire de cette lame. On peut aussi considérer une lame achromatique comme par exemple le rhomboèdre de Fresnel.

Le but de la lame quart d'onde 21 est de transformer les polarisations linéaires des deux composantes du faisceau composite en une polarisation circulaire, par exemple dans le sens levogyre. L'axe optique de la lame doit faire un angle de $\pi/4$ radians avec la direction de polarisation du faisceau composite.

Le faisceau composite émergeant de la lame quart d'onde 21 atteint alors la tête d'enregistrement-lecture 2 qui seule est mobile par rapport aux pistes portant les informations 7. Les deux composantes du faisceau composite sont réfléchies par un miroir galvanométrique M, vers l'objectif $O_b$ pour être focalisées sur la face du disque portant les pistes d'informations 7, en deux taches respectivement de lecture 3 et d'enregistrement 4.

Après réflexion sur le disque les deux composantes du faisceau composite suivent le chemin optique inverse et sont toujours polarisées circulairement, mais dans le sens dextrogyre. Après traversée de la lame quart d'onde 21, le faisceau composite transmis du cube polariseur 20 est à nouveau polarisé linéairement. Mais la nouvelle direction de polarisation, commune aux deux composantes du faisceau composite après réflexion sur le disque, est orthogonale à celle du faisceau originel. Il s'en suit qu'à la traversée du cube 20 les deux composantes du faisceau composite vont être réfléchies par la face commune aux deux prismes de ce cube, ce suivant l'axe $\Delta_2$, orthogonal à l'axe $\Delta_X$ pour former le faisceau composite $F_d$.

Ce faisceau $F_d$ est alors scindé en ses deux composantes par un second miroir dichroïque 11 suivant les deux axes $\Delta_2$ et $\Delta_3$.

Deux optiques de focalisation $L_3$ et $L_4$ focalisent alors les deux composantes de ce faisceau composite $F_d$ pour aller atteindre respectivement les moyens photodétecteurs $D_A$ et $D_B$.

L'intérêt du dispositif de l'invention est que l'on obtient un rendement optique maximum car il n'y a pas de pertes lors du mélange ou lors de la séparation des différents faisceaux lumineux.

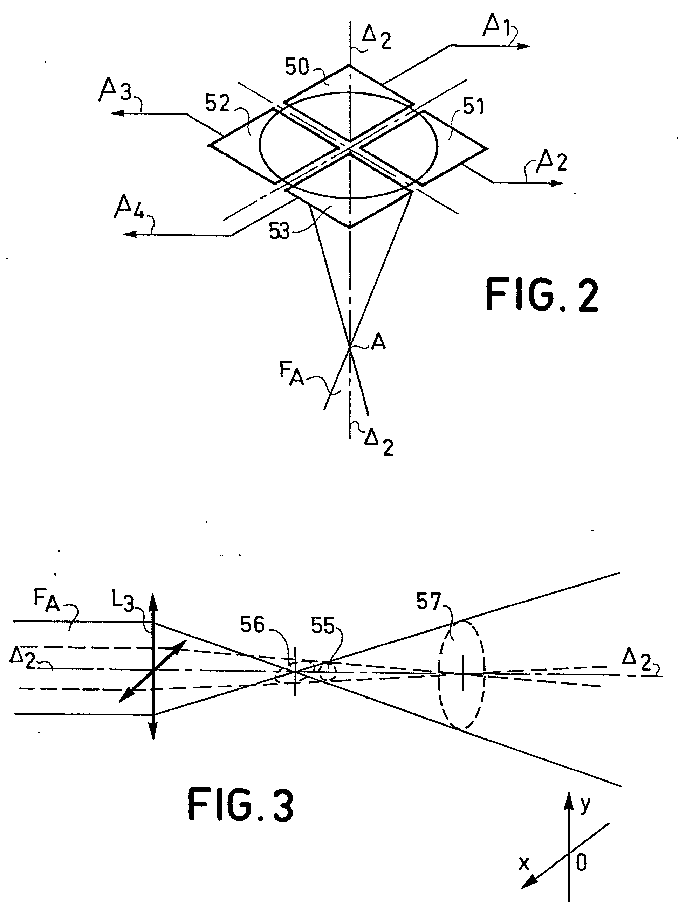

Ces organes photodétecteurs $D_A$ et $D_B$ peuvent comprendre par exemple chacun quatre photodétecteurs disposés selon quatre quadrants comme représenté à la figure 2. Ces photodétecteurs sont disposés perpendiculairement aux axes $\Delta_2$ et $\Delta_3$. Les lentilles $L_3$ et $L_4$ focalisent sur le plan de ces photodétecteurs $D_A$ et $D_B$ les deux composantes du faisceau composite réfléchi en deux faisceaux séparés respectivement de lecture et d'enregistrement. Ainsi, tant au cours de la lecture que de l'enregistrement ces moyens de détection $D_A$ et $D_B$ doivent permettre de détecter les erreurs de focalisation (le point de focalisation (3 ou 4) n'est pas exactement dans le plan du disque) exprimées sous la forme d'un décalage en z, et les erreurs de suivi radial (le point de focalisation (3 ou 4) n'est pas situé sur la piste gravée, dans le cas de la lecture ; ou sur la piste que l'on souhaite tracer généralement matérialisée sous la forme d'une piste prégravée dans le cas de l'enregistrement), exprimée sous la forme d'un décalage selon l'axe radial du disque 5. Et enfin dans le cas de la lecture, ces moyens photodétecteurs $D_A$ sont fonction de l'état de surface du disque 5 au point de convergence 3. La présence d'une empreinte gravée en creux implique une interruption ou une diminution du pouvoir réfléchissant du disque 5. Au contraire, dans les zones non gravées, le faisceau est totalement réfléchi. Ainsi la puissance du faisceau de lecture qui atteint les photodétecteurs $D_A$ est modulé au fur et à mesure de la rotation du disque 5 et de l'avance radiale de la tête, au rythme de la modulation de relief préalablement inscrite sur ce disque 5.

Un mode de réalisation de ces photodétecteurs $D_A$ est représenté à la figure 2. Il permet d'obtenir un signal d'erreur de suivi radial, un signal d'erreur de focalisation, et éventuellement un signal de lecture. Les moyens de détection comprennent 4 photodétecteurs 50, 51, 52, 53 disposés dans un plan perpendiculaire à l'axe $\Delta_2$. Il en serait de même pour les moyens de détection $D_B$ perpendiculaires à l'axe $\Delta_3$.

Les quatre photodétecteurs sont disposés en carré autour de l'axe $\Delta_2$ le

plus proche possible les uns des autres, et de telle sorte qu'en l'absence de toute erreur de focalisation, la puissance du faisceau $F_A$ se répartisse de façon égale dans les quatre photodétecteurs, et que, avec ou sans erreurs, la tache formée dans le plan des photodétecteurs par le faisceau $F_A$ soit entièrement contenue dans leur superficie, afin qu'ils détectent la quasi-totalité de la puissance du faisceau $F_A$. Ainsi la somme des signaux de sortie respectifs de ces quatre photodétecteurs $s_1$, $s_2$, $s_3$, $s_4$ indique la présence ou non d'une empreinte sur le disque à l'emplacement de la tache et constitue donc un signal de lecture. Le faisceau $F_A$ est un faisceau stigmatique qui converge donc en un point A. La tache obtenue dans le plan des photodétecteurs est circulaire et centrée sur l'axe $\Delta_2$. Il en est de même avec le faisceau $F_B$ qui converge en un point B. Dans la suite on considère l'exemple du faisceau de lecture $F_l$. Il en serait de même avec le faisceau d'écriture $F_e$. Le diagramme de rayonnement d'un laser stigmatique n'est pas isotrope aussi on dispose un prisme anamorphoseur à la sortie de ce laser pour modifier la forme du faisceau et la rendre circulaire.

Dans le cas de la méthode de détection de l'erreur de focalisation de l'art connu, dite méthode asymétrique, décrite dans la demande de brevet en France n° 79.28 694 déposée le 21 Novembre 1979, on créé un décalage d entre les axes du dispositif optique et l'axe $\Delta_x$, le faisceau $F_l$ étant stigmatique. L'axe optique ne passant plus par le centre optique O de l'objectif $O_b$, le faisceau réfléchi par le disque 5 ne coïncide plus avec le faisceau incident ; même en l'absence d'erreur de focalisation les deux faisceaux sont décalés de 2d. Il en résulte après traversée de la lentille $L_3$ un décalage angulaire $\beta$. Le faisceau $F_A$ converge au point A mais son axe forme un angle $\beta$ avec l'axe $\Delta_2$. Une défocalisation provoque alors dans un plan de détection perpendiculaire à l'axe $\Delta_2$ un déplacement de la tache lumineuse qui peut être détecté au moyen de deux photodétecteurs, disposés de façon à recevoir la même fraction d'énergie lumineuse lorsque l'erreur de focalisation est nulle.

En cas d'erreur de suivi radial lorsque le point de focalisation 3 est décalé par rapport à la piste prégravée ou à la piste porteuse d'information, seule une partie du faisceau incident se trouve réfléchie et l'intensité n'est plus également répartie entre deux photodétecteurs placées symétriquement par rapport à l'axe $\Delta_2$. Si l'on fait en sorte que le décalage d créé entre l'axe optique et l'axe $\Delta_X$ corresponde à un décalage sur le disque dans une direction tangentielle aux sillons enregistrés, il est alors nécessaire de disposer quatre photodétecteurs disposés en carré autour de l'axe $\Delta_2$.

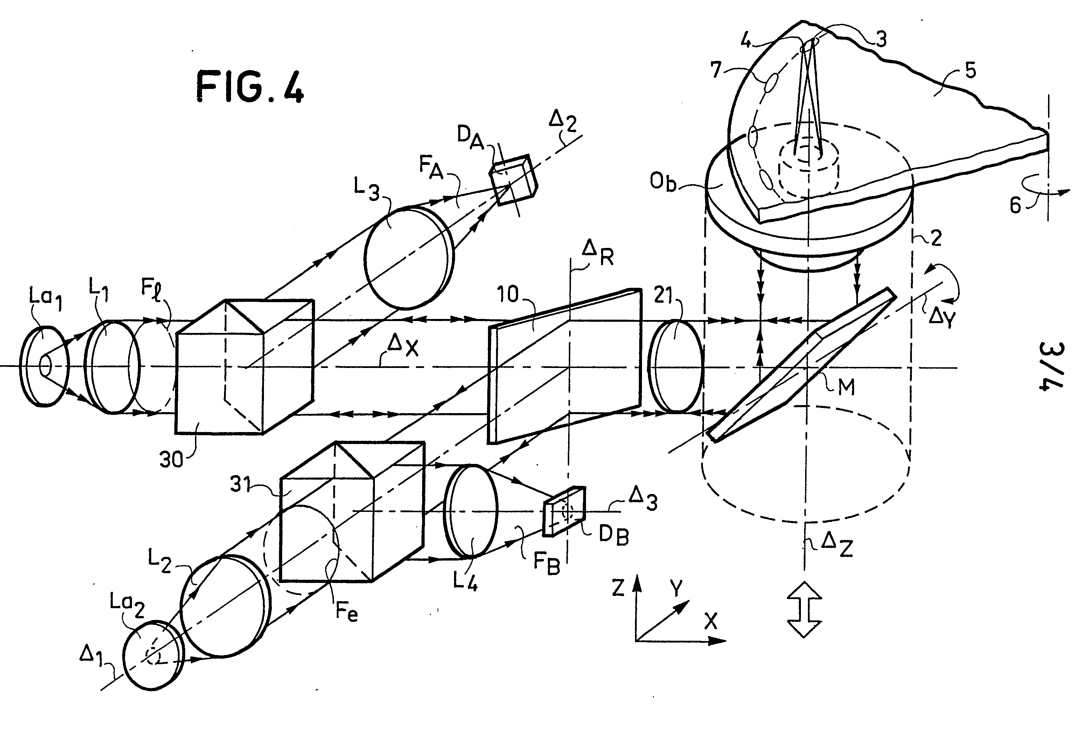

Il en est de même avec le faisceau d'écriture $F_e$. Un autre type d'asservissement de focalisation consiste à utiliser des sources laser $La_1$ et $La_2$ astigmatiques à semi-conducteur, de type à "guidage par gain" qui ne nécessitent plus la présence d'un prisme anamorphoseur. On peut alors utiliser deux sources laser de même type et interposer entre le moyen séparateur 20 et la tête optique 2 une lentille astigmatique qui permettre de rendre stigmatique le faisceau composite incident. Elle rend, par la même, le faisceau composite réfléchi astigmatique. En effet, le faisceau incident est corrigé par cette lentille astigmatique. Le faisceau focalisé par l'objectif $O_b$ est donc dépourvu d'astigmatisme. Mais après réflexion sur le disque 5 il retraverse cette lentille astigmatique. Il se trouve donc réfléchi par le cube séparateur 20 en présentant à nouveau de l'astigmatisme du fait du passage dans cette lentille astigmatique. Et cet astigmatisme est un astigmatisme radial représenté à la figure 4. Il n'y a plus, alors, focalisation en un point. On a dessiné le rayonnement $F_A$ dans deux plans perpendiculaires, on obtient du fait de l'astigmatisme axial deux points de convergences différents $M_1$ et $M_2$ dans ces deux plans perpendiculaires. On obtient une tache lumineuse minimum en 55, située entre ces deux points $M_1$ et $M_2$. On positionne les photodétecteurs dans le plan de cette tache, perpendiculairement à l'axe $\Delta_2$.

Lorsqu'après réglage de la position des photodétecteurs, il y a mauvaise focalisation du faisceau F sur le disque 4, les photodétecteurs ne détectent plus une tache lumineuse de forme 55 mais de forme 56 ou de forme 57 ; ce qui permet d'extraire un signal d'erreur.

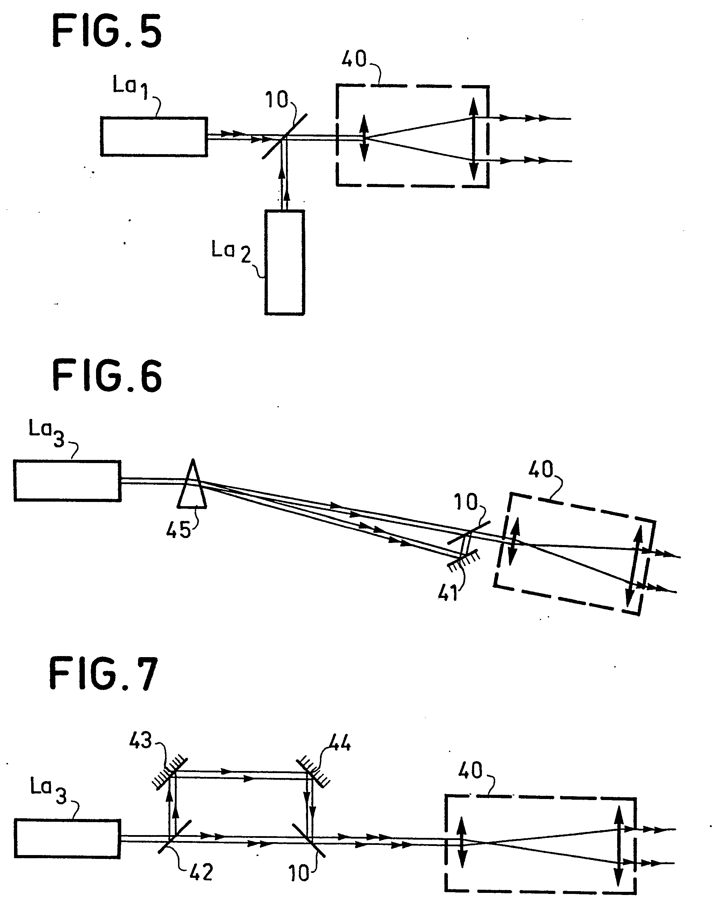

Les quatre photodétecteurs sont orientés de telle façon que leurs diagonales se superposent avec les deux axes de la figure 7, Ox et Oy. Ce qui revient à incliner à 45° les axes limitant les quatre quadrants de ces photodétecteurs par rapport aux lignes de focalisation qui sont parallèles aux côtés de la fenêtre émissive de la source laser.

Une autre solution consiste à utiliser des photodétecteurs à deux quadrants comme décrit dans la demande de brevet en France n° 80.11 801 déposée le 28 Mai 1980. Les deux organes $D_A$ et $D_B$ comprennent chacun respectivement deux photodétecteurs $D_1$, $D_2$ et $D_3$, $D_4$ disposés perpendiculairement respectivement aux axes $\Delta_2$ et $\Delta_3$. Les lentilles $L_3$ et $L_4$ focalisent les deux composantes du faisceau composite réfléchi en deux taches de lecture et d'écriture sur les plans de ces photodétecteurs.

Les signaux de sortie des photodétecteurs $D_1$ et $D_2$ sont transmises aux entrées de deux amplificateurs différentiels $A_1$, $A_2$, le premier effectuant la somme des signaux de sortie des photodétecteurs $D_1$ et $D_2$, et le second la différence de ces mêmes signaux. Les signaux présents sur la sortie de l'amplificateur $A_1$ peuvent être utilisés pour élaborer des signaux représentant les informations lues sur le disque et les signaux présents sur la sortie de l'amplificateur $A_2$ pour élaborer des signaux d'asservissement vertical de la tête d'enregistrement-lecture 2.

Il en est de même pour l'enregistrement. Les sorties des photodétecteurs $D_3$ et $D_4$ sont reliées à un troisième amplificateur différentiel $A_3$ effectuant la somme des signaux présents sur les sorties de ces photodétecteurs. Les signaux présents sur la sortie de l'amplificateur différentiel $A_3$ peuvent être utilisés pour élaborer des signaux représentant les signaux en cours d'enregistrement et contrôler ainsi cet enregistrement.

Le suivi radial de piste sur le disque peut être obtenu en utilisant le faisceau d'enregistrement en connectant les sorties des photodétecteurs $D_3$ et $D_4$ à un quatrième amplificateur différentiel $A_4$, effectuant la différence des signaux de sortie des photodétecteurs $D_3$ et $D_4$. Les signaux présents sur la sortie de cet amplificateur différentiel $A_4$ peuvent être utilisés pour élaborer des signaux d'erreur.

Une variante du dispositif suivant l'invention est représentée à la figure 4. Contrairement au dispositif illustré à la figure 1, la séparation entre les faisceaux incidents issus des sources laser $La_1$ et $La_2$ et les faisceaux réfléchis par le support 5 est réalisée au niveau de chacun des faisceaux respectivement de lecture $F_l$ et d'écriture $F_e$.

Ainsi les moyens de séparation des faisceaux par polarisation 20 ont été dédoublés (30 et 31) pour séparer respectivement les faisceaux incidents issus des sources laser $La_1$ et $La_2$ des faisceaux réfléchis provenant du disque et dirigés vers les moyens détecteurs $D_A$ et $D_B$.

Les moyens de séparation 30 et 31 sont semblables au cube séparateur 20 de la figure 1 décrit précédemment. Ils permettent de séparer les ondes incidentes ayant une certaine polarisation des ondes réfléchies sur le disque qui ont une polarisation de 90° de celles-ci. A la sortie du miroir dichroïque comme dans le cas de la figure 1, on obtient le faisceau incident composite ayant deux composantes respectivement de lecture et d'enregistrement de directions de polarisation parallèles.

Comme dans le cas de la figure 1, la lame quart d'onde 21 est dichroïque. Mais il est aussi possible de remplacer cette lame 21 par deux lames quart d'onde monochromatiques, pour chacune des deux longueurs d'onde considérées $\lambda_1$ et $\lambda_2$. On peut alors les intercaler respectivement entre le cube séparateur 30 et le miroir dichroïque 10, et entre le cube séparateur 31 et le miroir dichroïque 10.

Les sources laser considérées jusqu'à présent sont des sources lasers semi-conducteur. Ces lasers se caractérisent par une émission très divergente. Ils nécessitent la mise en oeuvre des optiques collimatrices $L_1$ et $L_2$.

Mais ces sources laser $La_1$ et $La_2$ peuvent être aussi des laser à gaz, par exemple des lasers à gaz HeNe. Ces lasers émettent un faisceau parallèle polarisé. Comme il est connu, la section de ce faisceau est très faible et doit en conséquence être agrandie. Aussi les lentilles $L_1$ et $L_2$ doivent être remplacées par des afocaux tels que les faisceaux émergents parallèles puissent permettent ensuite de recouvrir la pupille d'entrée de l'objectif $O_b$. Dans le cas de la figure 1, on peut ne considérer qu'un afocal disposé comme cela est illustré à la figure 5.

On peut aussi utiliser dans le même dispositif une source laser à semi-conducteur et une source laser à gaz, la première comportant une lentille collimatrice et la seconde un afocal.

On peut aussi utiliser un laser à gaz à deux longueurs d'onde $La_3$. On peut alors comme à la figure 6 considérer un prisme pour séparer les faisceaux d'enregistrement et de lecture. Un miroir 41 permet de retrouver le cas considéré à la figure 5.

On peut aussi comme à la figure 7 utiliser un miroir dichroïque 42 pour séparer les deux faisceaux puis deux miroirs 43, 44 et l'on retrouve alors le cas considéré à la figure 5.

Dans tous les cas de figure considérés, on n'a pas représenté l'angle existant entre les deux composantes du faisceau composite provenant des sources laser $La_1$ et $La_2$ à la sortie du miroir dichroïque 10. En effet cet angle très faible permet d'obtenir deux taches de focalisation 3 et 4 très rapprochées à la surface du disque 5, pour pouvoir rester dans le champ de l'objectif $O_b$. En effet en inclinant le miroir dichroïque le faisceau transmis $F_1$ reste inchangé en direction, par contre le faisceau réfléchi $F_e$ voit sa direction de propagation modifiée. On a considéré jusqu'à présent un élément séparateur de faisceau réalisé avec un cube polariseur mais on pourrait tout aussi bien utiliser des prismes de type wollaston, rochon ou sénarmont.

14

## REVENDICATIONS

1. Dispositif optique d'enregistrement lecture d'un support d'information comportant des moyens d'émission de deux rayonnements polarisés dans une mêmè directon et de longueurs d'onde différentes ($\lambda_1$ et $\lambda_2$), l'un de ces rayonnements étant utilisé pour la lecture d'informations enregistrées sur le support d'information (5) et l'autre rayonnement étant utilisé pour l'enregistrement d'informations sur ce support d'informations (5) ; l'enregistrement et la lecture s'effectuant grâce à une tête d'enregistrement lecture (2) solidaire d'un équipage mobile par rapport au support d'informations (5) et comprenant un objectif ($O_b$) focalisant ces rayonnements sur la face réfléchissante de ce support (5) selon deux taches lumineuses distinctes et rapprochées l'une de l'autre (3 et 4), les rayonnements réfléchis par cette face étant recueillis par cet objectif ($O_b$) et transmis vers des moyens photodétecteurs ($D_A$ et $D_B$), caractérisé en ce que les rayonnements reçus par la pupille d'entrée de l'objectif ($O_b$) proviennent d'une lame dichroïque (10) ; les rayonnements réfléchis par le support (5) et émergeant de l'objectif ($O_b$) subissant une séparation de type dichroïque ; ces rayonnements reçus et ces rayonnements réfléchis étant séparés optiquement par au moins un ensemble séparateur par polarisation et au moins une lame quart d'onde.

2. Dispositif optique selon la revendication 1, caractérisé en ce que les moyens d'émission de deux rayons polarisés comportent au moins une source laser à gaz suivi d'un système afocal.

3. Dispositif optique selon la revendication 2, caractérisé en ce que ces moyens d'émission comportent une source laser à gaz délivrant les deux rayons polarisé de longueurs d'onde différentes.

4. Dispositif optique selon la revendication 3, caractérisé en ce que ces rayons polarisés de longueurs d'onde différentes, sont séparés à l'aide d'un prisme (45).

5. Dispositif optique selon la revendication 3, caractérisé en ce que ces rayons polarisés de longueurs d'onde différentes, sont séparés à l'aide d'un miroir dichroïque (42).

6. Dispositif optique selon la revendication 1, caractérisé en ce que les moyens d'émission de deux rayons polarisés comportent au moins une source laser à semi-conducteur suivi d'une optique convergente.

7. Dispositif optique suivant la revendication 1, caractérisé en ce que cet ensemble séparateur par polarisation comporte deux prismes réfringents accolés par leurs hypoténuses de façon à former une surface séparatrice semi-réfléchissante.

8. Dispositif optique suivant l'une quelconque des revendications 1 et 7, caractérisé en ce qu'un ensemble séparateur (20) par polarisation est positionné entre cette lame dichroïque (10) et ce support d'information (5).

9. Dispositif optique suivant l'une quelconque des revendications 1, 7 et 8, caractérisé en ce que cette séparation de type dichroïque est réalisée à l'aide d'une deuxième lame dichroïque (11).

10. Dispositif optique suivant l'une quelconque des revendications 1 et 7, caractérisé en ce qu'un ensemble séparateur par polarisation est positionné entre chaque moyen d'émission et la lame dichroïque (10).

11. Dispositif optique suivant l'une quelconque des revendications 1, 7 et 10, caractérisé en ce que cette séparation de type dichroïque est réalisée à l'aide de cette même lame dichroïque (10).

12. Dispositif optique suivant l'une quelconque des revendications précédentes, caractérisé en ce qu'une lame quart d'onde dichroïque (21) est interposée sur le parcours des rayonnements reçus par la tête d'enregistrement lecture (2) juste avant qu'ils ne l'atteignent.

13. Dispositif optique suivant l'une quelconque des revendications 1, 7, 10 et 11, caractérisé en ce que deux lames quart d'onde monochromatiques sont positionnées respectivement entre la lame dichroïque (10) et les deux ensemble séparateurs par polarisation.

14. Dispositif optique suivant l'une quelconque des revendications précédentes, caractérisé en ce que ce miroir dichroïque (10) est mobile par rotation autour d'un axe $\Delta_R$ de façon à rendre réglable la valeur de l'angle entre les deux composantes du faisceau composite issu des deux sources.

FIG. 2

FIG. 3

FIG. 4

0056920

3/4

# FIG.5

La₁

10

40

La₂

# FIG.6

La₃

45

10

41

40

# FIG.7

43

44

La₃

40

42

10

Office européen
des brevets

**RAPPORT DE RECHERCHE EUROPEENNE**

Numéro de la demande

EP 81 40 2053

| | DOCUMENTS CONSIDERES COMME PERTINENTS | | CLASSEMENT DE LA DEMANDE (Int. Cl. 3) |
|---|---|---|---|
| Catégorie | Citation du document avec indication, en cas de besoin, des parties pertinentes | Revendica-tion concernée | |
| A | FR - A - 2 440 055 (MITSUBISHI)<br><br>* Page 11, ligne 10 - page 14, ligne 4, page 17, lignes 16-27; page 18, lignes 9-28; page 20, lignes 5-25; figures 1, 4,8-12 *<br><br>-- | 1,7-9, 12 | G 11 B 7/12 |
| A | PATENTS ABSTRACTS OF JAPAN, vol. 3, no. 98, 18 août 1979, page 97 E 131<br><br>& JP - A - 54 76 108 (CANON K.K.) (18-06-1979)<br><br>* En entier *<br><br>-- | 1,6,7 | |
| A | FR - A - 2 313 731 (HITACHI)<br><br>* Page 3, ligne 22 - page 4, ligne 16; figure 3 *<br><br>-- | 1,11 | **DOMAINES TECHNIQUES RECHERCHES (Int. Cl. 3)**<br><br>G 11 B<br>G 02 B 27 |
| A | DE - A - 2 634 243 (BOSCH)<br><br>* Page 10, ligne 16 - page 11, ligne 11; figure 3 *<br><br>& US - A - 4 167 024<br><br>-- | 1,7,8, 12,13 | |
| A | US - A - 4 174 150 (CONGLETON)<br><br>* Colonne 2, lignes 31-42; fi-gure 1 *<br><br>& FR - A - 2 341 873<br><br>---- | 1 | **CATEGORIE DES DOCUMENTS CITES**<br><br>X: particulièrement pertinent à lui seul<br>Y: particulièrement pertinent en combinaison avec un autre document de la même catégorie<br>A: arrière-plan technologique<br>O: divulgation non-écrite<br>P: document intercalaire<br>T: théorie ou principe à la base de l'invention<br>E: document de brevet antérieur, mais publié à la date de dépôt ou après cette date<br>D: cité dans la demande<br>L: cité pour d'autres raisons<br><br>&: membre de la même famille, document correspondant |

Le présent rapport de recherche a été établi pour toutes les revendications

| Lieu de la recherche | Date d'achèvement de la recherche | Examinateur |
|---|---|---|
| La Haye | 19-03-1982 | RAHNER |

OEB Form 1503.1   06.78